(19) Europäisches Patentamt
European Patent Office
Office européen des brevets

(11) Publication number: **0 152 593**
**A2**

(12) **EUROPEAN PATENT APPLICATION**

(21) Application number: **84115396.8**

(22) Date of filing: **13.12.84**

(51) Int. Cl.⁴: **C 08 F 10/00**, C 08 F 4/62, B 01 D 37/00

(30) Priority: **23.12.83 US 566111**

(43) Date of publication of application: **28.08.85**
**Bulletin 85/35**

(84) Designated Contracting States: **AT BE CH DE FR GB IT LI LU NL SE**

(71) Applicant: **PHILLIPS PETROLEUM COMPANY, 5th and Keeler, Bartlesville Oklahoma 74004 (US)**

(72) Inventor: **Crowe, Marie Gemmell, 6161 Pineland Drive no. 1934, Dallas, Texas 75231 (US)**
Inventor: **Marwil, Stanley Jackson, 5700 S.E.Baylor Drive, Bartlesville, Oklahoma 74006 (US)**

(74) Representative: **Dost, Wolfgang, Dr.rer.nat., Dipl.-Chem. et al, Patent- und Rechtsanwälte Pagenberg-Dost-Altenburg & Partner Galileiplatz 1, D-8000 München 80 (DE)**

# (54) Process for producing a catalyst for the polymerization of olefines.

(57) By including filter means in the conduit used to decant liquids which have been used to contact a catalyst component or catalyst prepared for the polymerization of olefins, the catalyst and polymers prepared therewith are improved. For example, with a supported transition metal catalyst the catalyst productivity is increased and the proportion of fines in polyethylene prepared therewith is reduced.

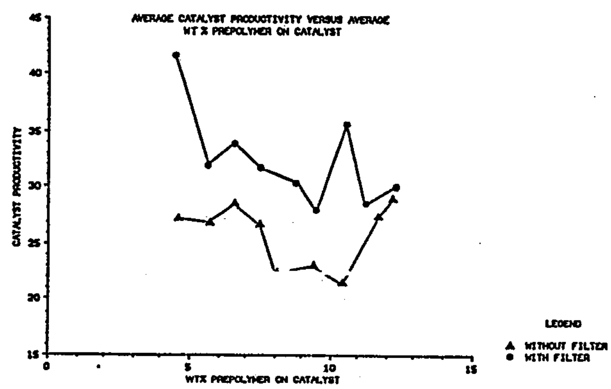


EP 0 152 593 A2

# PROCESS FOR PRODUCING POLYMERIZATION CATALYST

This invention relates to the production of catalysts for polymerization, to catalysts and to polymerization processes. In another aspect, it relates to the production of catalysts for the polymerization of olefins, and to polymerization of olefins in the presence of such catalysts.

## BACKGROUND OF THE INVENTION

In the production of polyolefins, such as for example polyethylene, polypropylene, ethylene-butene copolymers etc., an important aspect of the various processes and catalysts used to produce such polymers is the productivity. By productivity is meant the amount or yield of solid polymer that is obtained by employing a given quantity of catalystfor a given time. If the productivity is high enough then the amount of catalyst residues contained in the polymer is low enough that the presence of the catalyst residues does not significantly affect the properties of the polymer and the polymer does not require additional processing to remove the catalyst residues. As those skilled in the art are aware, removal of catalyst residues from polymer is an expensive process and it is very desirable to employ a catalyst which provides sufficient productivity so that catalyst residue removal is not necessary.

In addition to productivity of a catalyst, another important aspect of a polymerization process and a catalyst is the properties of the polymer particles. It is desirable to produce polymer particles which are characterized by strength, uniformity of size, and relatively low fines. Although polymer fluff having relatively high percentages of fines can be handled with plant modifications, a polymer of high productivity and low fines is highly desirable.

In many processes for the production of solid or heterogeneous catalysts, it is necessary to wash the newly produced catalyst particles repeatedly to remove impurities, leftover reactants and the like. It is also necessary or desirable to control the particle size distribution of such catalysts to facilitate handling and optimize their performance in the polymerization process. For example, catalyst particles below some given minimum size are often undesirable due to handling problems and polymerization characteristics.

Catalyst particles to be washed can be combined with a liquid suitable for removal of impurities to form a slurry, then separated from the wash liquid. Separation can be accomplished by various filtering means, or by allowing the particles to settle (by gravitational or centrifugal force), then decanting the supernatant liquid. However, such filtering or settling processes are slow or expensive (since energy is required to generate centrifugal force), and it is difficult to clearly remove the major part of the supernatant liquid without removing some catalyst particles as well.

Drake and Cowan disclose in U.S. Patent 4,066,417 (1978), assigned to Phillips Petroleum Company, a process for contacting a fluid with solid particles in a vessel, e.g. catalyst particles and liquid reactants, and withdrawing said fluid and/or a fluid product through a passageway provided with filtering means to prevent the solid particles from escaping. However, this process has not heretofore been applied to the contacting of catalyst particles with inert liquids in catalyst production processes. Improved processes for washing freshly produced catalyst particles, for example, are desired.

## SUMMARY OF THE INVENTION

An object of this invention is to provide an improved method for the production and washing of solid catalysts, particularly catalysts for polymerization of olefins. A further object is to provide a method for washing catalysts with fewer wash operations, requiring less wash liquid and less time.

Another object of this invention is improved olefin polymerization catalysts which contain fewer particles below a stated minimum size, offer higher productivity in polymerization and produce polymers containing fewer fine particles.

Still another object of this invention is to provide improved polymers prepared with a polymerization catalyst prepared in accordance with this invention.

In accordance with this invention, methods of producing solid catalyst for the polymerization of olefins are provided, comprising the steps of contacting a solid component of a catalyst at least once with an inert treating liquid, e.g. a wash liquid, to form a slurry, allowing solid particles to settle, then removing at least a portion of said liquid from the resulting slurry via a decanting conduit fitted with filter means. The filter means are fitted at or near the intake end of the decanting conduit inside the vessel (hence can be described as an "internal filter"), are positioned at or near the boundary area between the denser slurry of settled particles and the supernatant liquid, and preferably have a surface area much larger than the cross-sectional area of the decanting conduit. The invention can be practiced with various olefin polymerization catalysts, including but not limited to supported transition metal catalysts as described herein. Said filter means can have porosity and other characteristics suitable to reduce the proportion of catalyst fines below a certain defined size level.

Surprisingly, it is found that polyolefins, e.g. such as polyethylene, prepared with certain catalysts produced in accordance with this invention have reduced proportions of polymer fines. Furthermore, the catalyst prepared in accordance with the invention displays improved productivity in the polymerization of olefins such as ethylene in conjunction with this low polymer fines content.

Further according to the invention, a small but effective amount of olefin polymer can be prepolymerized on the solid catalyst. Still further according to the invention are processes of making polymers with catalysts according to the invention, and polymerization processes utilizing catalysts according to the invention.

BRIEF DESCRIPTION OF THE DRAWINGS

FIGURE 1 is a plot of average productivity vs. average prepolymer content (wt. percent) for catalysts made with and without use of the internal filter.

FIGURE 2 is a plot of average fines content (wt. percent of particles < 200 mesh) vs. average prepolymer content (wt percent) of the

catalyst for polymers made with catalysts made with and without use of the internal filter.

## DETAILED DESCRIPTION OF THE INVENTION

The inventive method for producing solid particulate catalyst comprises at least one step of contacting said catalyst and/or a catalyst component or precursor with a reagent, treating or wash liquid, allowing solid particles of said catalyst to at least partially settle to form a denser slurry and a supernatant liquid, then removing at least a portion of said liquid via a decanting conduit fitted with filter means, preferably an internal filter i.e. a filter contained and employed inside the vessel. The filter, described in more detail below, is fitted at or near the intake end of the decanting conduit and preferably has a surface area much larger than the cross-sectional area of the decanting conduit. The filter means are positioned at or near the boundary area between a precipitate or denser slurry and the supernatant liquid, so as to facilitate the removal of a maximum of liquid. By using a vessel pressure higher than the pressure at the outlet end of the conduit (i.e. vessel overpressure or conduit vacuum) the liquid is decanted through the conduit. The large filter surface area minimizes the fluid velocity of the filter surface, thus reduces the agitation of the particles nearby.

The vessel in which the reactions and contacting steps take place can be of any suitable size and shape, and is preferably closed for the preparation of olefin polymerization catalysts. It can contain a stirrer or other means for agitating the fluids and slurries of the process. Conventionally, the decanting conduit can enter the vessel from an upper surface, but it can also enter the vessel from the side or bottom, so long as the filter means is positioned at or near the boundary area between the denser slurry and supernatant liquid. The porosity and permeability of the filter are selected to pass particles which are finer than desired in the catalyst, to retain coarser particles, and to permit the decanting operations to be completed in reasonable time periods.

The method for producing catalyst using the internal filter can be used in any catalyst manufacturing process where slurries are generated and where said slurries are further treated with various contacting liquids, e.g. reagents, solvents, diluents, halide treating agents, wash liquids and the like. The purpose is to minimize settling times, to reduce fines content in the catalyst, and to recover any

catalyst which could otherwise be lost in decanting mother liquors and wash liquids employed in the process.

The catalysts contemplated in this invention can exhibit high productivities, e.g. ranging up to about 250 kg of low melt index polyethylene per g solid catalyst per hour at 80°C in the absence of hydrogen. By low melt index is meant values of about 1 or less. The activity of such catalysts can be depressed in the presence of hydrogen as is recognized in the art. Hydrogen is generally used to adjust the molecular weight of the polymer to obtain the desired melt index of the ethylene polymer. In a continuous process, as shown in Table 14B of U.S. Patent 4,325,837, it is possible to obtain productivities up to about 121 kg polyethylene per g solid catalyst per hour at 102°C in the presence of 0.86 mole percent hydrogen based on the isobutane, ethylene and hydrogen present in the reactor. The polyethylene made had a melt index of 30. Typically, in preparing polymers of similar or different melt indices with such catalysts, productivities can vary from about 30 to about 120 kg or more polyethylene per g catalyst per hour, depending upon the polymerization conditions employed.

The inventive method is of particular benefit in producing catalysts for the polymerization of olefins such as those described by Capshew in U.S. Patent 4,363,746 (1982), Capshew et al in U.S. Patent 4,325,837 (1982) and in U.S. Patent 4,394,291 (1983), all assigned to Phillips Petroleum Company. The invention is generally applicable to the production of catalysts with or without the formation of prepolymer at various stages, as described in these references.

These catalysts to which the invention is particularly beneficial are compounds of transition metals such as titanium, vanadium, chromium and zirconium, supported on Group II metal halides such as $MgCl_2$, as described in Columns 3 - 4 of U.S. Patent 4,325,837. For example, a typical catalyst comprises a composition of matter resulting from the chemical combination of a Group II metal halide compound and a transition metal compound wherein the metal halide compound is selected from metal dihalides and metal hydroxyhalides and the metal of the metal halide compound is selected from Group IIA and Group 11B metals of the Mendeleev Periodic Table and wherein the transition metal of the transition metal compound is selected from Group IVB and Group VB transition metals of the Mendeleev Periodic Table and the transition

metal is bonded to at least one atom selected from oxygen, nitrogen and sulfur, and said oxygen, nitrogen and sulfur atoms are in turn bonded to a carbon atom of a carbon-containing radical, preferably a hydrocarbon radical.

As noted above, the metal compound is selected from metal dihalide compounds and metal hydroxyhalide compounds and the metal of the metal halide compound is selected from Group IIA and Group IIB metals, such as for example beryllium, magnesium, calcium and zinc. Some suitable metal halide compounds include for example, beryllium dichloride, beryllium dibromide, beryllium hydroxyiodide, magnesium dichloride, magnesium bromide, magnesium hydroxychloride, magnesium diiodide, magnesium difluoride, calcium dichloride, calcium dibromide, calcium dibromide, calcium hydroxybromide, zinc dichloride, zinc difluoride, and zinc hydroxychloride. While metal hydroxyhalide compounds are known in the art, they are not as common and as readily available as metal dihalide compounds; therefore, metal dihalides are preferred. Of the metal dihalides, magnesium dihalides, and particularly magnesium dichloride is preferred because it is readily available and relatively inexpensive and has provided excellent results. The metal dihalide component is generally used in the form of an anhydrous, particulate solid to facilitate its reaction with the transition metal compound.

The transition metal of the transition metal compound noted above is selected from Group IVB and Group VB transition metals and is generally selected from titanium, zirconium, and vanadium, although other transition metals can be employed. Excellent results have been obtained with titanium compounds and they are preferred. Some of the titanium compounds suitable for use include, for example, titanium tetrahydrocarbyloxides, titanium tetraimides, titanium tetraamides and titanium tetramercaptides. Other transition metal compounds include, for example, zirconium tetrahydrocarbyloxides, zirconium tetraimides, zirconium tetraamides, zirconium tetramercaptides, vanadium tetrahydrocarbyloxides, vanadium tetraimides, vanadium tetraamides and vanadium tetramercaptides.

The titanium tetrahydrocarbyloxides are the presently preferred titanium compounds because they produce excellent results and are readily available. Suitable titanium tetrahydrocarbyloxide compounds include

those expressed by the general formula $Ti(OR)_4$, wherein each R is individually selected from an alkyl, cycloalkyl, aryl, alkaryl, and aralkyl hydrocarbon radical containing from about 1 to about 20 carbon atoms per radical and each R can be the same or different. Titanium tetrahydrocarbyloxides in which the hydrocarbyl group contains from about 1 to about 10 carbon atoms per radical are most often employed because they are more readily available.

The molar ratio of the transition metal compound to the Group II metal halide compound can be selected over a relatively broad range. Generally the molar ratio is within the range of about 10:1 to about 1:10, preferably between about 3:1 and 0.5:2, however, the most common molar ratios are within the range of about 2:1 to about 1:2. When titanium tetrahydrocarbyloxide and magnesium dichloride are employed to form a catalyst by the method of the invention, a molar ratio of titanium to magnesium of about 2:1 is presently recommended as almost all the magnesium compound apparently goes into solution easily.

The metal halide compound and the transition metal compound employed in the present invention are normally mixed together by heating, e.g. refluxing, these two components together in a suitable dry (essential absence of water) solvent or diluent, which is essentially inert to these components and the product produced. Following the heating operation, the resulting solution can be filtered to remove any undissolved material or extraneous solid, if desired. The composition of matter of the present invention thus produced and which is in solution can be recovered from the solvent or diluent by crystallation or other suitable means, but is preferably recovered by treatment with a precipitating agent such as a hydrocarbyl aluminum halide, e.g. ethylaluminum sesquichloride.

The catalysts of the present invention are made up of two components. The first catalyst component comprises a composition of matter as described above, and the second catalyst component comprises a precipitating agent.

The metal halide compound/transition metal compound solution or first component solution (which can be formed by dissolving the recovered composition of matter in a suitable solvent or which can be formed initially by recovering the composition of matter from the solvent) can then be contacted with a hydrocarbon solution containing the second

component of the catalyst. A solid reaction product is formed which precipitates out of the solution.

The second catalyst component is a precipitating agent selected from the group consisting of organometallic compounds in which the metal is selected from metals of Groups I to III of the Mendeleev Periodic Table, metal halides and oxygen-containing halides of elements selected from Groups IIIA, IVA, IVB, VA, and VB of the Mendeleev Periodic Table, hydrogen halides, and organic acid halides expressed as

$$R'\text{--}\overset{\overset{\displaystyle O}{\|}}{C}\text{--}X$$

wherein R' is an alkyl, aryl, cycloalkyl group or combinations thereof containing from 1 to about 12 carbon atoms and X is a halogen atom.

Some organometallic compounds in which the metal is selected from metals of Group I, Group II, and Group III of the Mendeleev Periodic Table suitable for use as the second component include, for example, lithium alkyls, Grignard reagents, dialkyl magnesium compounds, dialkyl zinc compounds, trialkylaluminum compounds, and organoaluminum halide compounds of the formulas $R''_2AlX$, $R''AlX_2$ and $R''_3Al_2X_3$, wherein each R" is individually selected from linear and branched chain hydrocarbyl radicals containing from 1 to about 20 carbon atoms per radical and can be the same or different, and each X is a halogen atom and can be the same or different. Some suitable examples of these compounds are found in U.S. 4,325,837, column 8, lines 56 and following. The most preferred organometallic compounds for the precipitation are hydrocarbyl aluminum halides such as athylaluminum sesquichloride.

The molar ratio of the transition metal compound of the first catalyst component to the second catalyst component can be selected over a relatively broad range. Generally, the molar ratio of the transition metal of the first catalyst component to the second catalyst component is within a range of from about 10:1 to about 1:10, and more generally

within a range of about 2:1 to about 1:3, since a molar ratio within the latter range usually produces a catalyst which can be employed as an especially active ethylene polymerization catalyst.

Particularly effective catalysts have been obtained by treating the above-described catalyst comprising said first catalyst component and said second catalyst compound with a halide ion exchanging source, such as for example titanium tetrahalide. For convenience, the designation "catalyst A" refers to those catalysts which have not been treated with a halide ion exchanging source and the term "catalyst B" refers to those catalysts which have been so treated. In other words, catalyst B is catalyst A which is treated with a halide ion exchanging source. It has also been found desirable to employ either catalyst A or catalyst B with a cocatalyst comprising an organometallic compound.

After completing the mixing, the resulting slurry is stirred or agitated for a sufficient time, generally within a range of about 15 minutes to about 5 hours, to insure that mixing of the components is complete.

Thereafter, stirring can be discontinued and the solid product recovered by filtration, decantation, and the like. The product can then be washed with a suitable material such as a hydrocarbon, e.g., n-pentane, n-hexane n-heptane, cyclohexane, benzene, xylenes and the like, to remove any soluble material which may be present. The product can then be dried and stored under dry nitrogen. The products formed in this manner are designated as catalyst A as previously described.

As indicated above, the catalyst production method can include the step of mixing the first catalyst component solution and the second catalyst component under an olefin atmosphere.

The olefin atmosphere employed during preparation of the catalyst can be an aliphatic mono-1-olefin having from 2 to about 18 carbon atoms per molecule, preferably from 2 to about 10, or more preferably 2 to about 8 carbon atoms. Thus, the olefin can include such as, for example, ethylene, propylene, 1-butene, 1-pentene, 1-hexene, 1-heptene, 1-octene, 1-nonene and 1-decene, and mixtures of two or more thereof. When ethylene homopolymer is to be produced with the invention catalyst, generally an ethylene atmosphere is preferred during catalyst preparation. When ethylene copolymers are to be produced with the invention catalyst, it is sometimes desirable to use the same 1-olefin to

furnish the atmosphere in catalyst manufacture that will be used in producing the copolymer product. However, this is not required; and other mono-1-olefins such as are suitable for polymerization using the invention catalysts set out below can also be employed.

The olefin atmosphere can be provided by purging the catalyst preparation vessel with olefin and then controlling the addition of olefin to provide in the vessel from about .10 to about 1000 psia, total vessel pressure, since at much less than about 10 psig the concentration of dissolving olefin in the solution is negligible, and higher pressures can require high pressure equipment. Preferably pressures in the range of from about 10 to about 300 psig are used, permitting the use of lower rated equipment. Preferably, a suitable method of measuring and controlling the molar amount of ethylene added to the reactor is used so that an amount is present which will react to form the desired proportion of prepolymer on the catalyst.

According to the invention, prepolymer can be prepolymerized onto the composition formed by the reaction between the first catalyst component and the second catalyst component and the prepolymerized catalyst composition can be recovered and used in polymerization processes.

The prepolymerizing step can be performed by any method effective for prepolymerizing polymer onto the precipitate.

Olefins as herein described, such as, for example, aliphatic mono-1-olefins, e.g. ethylene, can be prepolymerized onto the catalyst of the present invention. Such prepolymerizations require an adequate amount of cocatalyst as herein described below for polymerization using the catalyst of the invention, for example, triethylaluminum and the like.

The monomer which is utilized for prepolymerization can be the same as or different from the monomer used in polymerization as set out herein. Preferably the same monomer can be used. Most preferably ethylene is used for prepolymerization due to its low cost and ready availability.

The weight of prepolymer based on the total weight of the composition, as indicated above, is preferably from about 1 to about 50 percent by weight of total composition, more preferably from about 3 percent to about 40 percent by weight, and most preferably from about 5

percent to about 20 percent by weight of the total composition, since this results in a catalyst with good feeding characteristics that can produce a polymer having relatively low fines content.

In one embodiment of the catalyst the prepolymerized catalyst A composition formed by the relatively rapid reaction between the first catalyst component and the second catalyst component can be recovered after deposition of prepolymer thereon and used in polymerization, preferably in combination with a cocatalyst comprising an organometallic compound as herein defined.

According to another aspect, catalyst A which does not have prepolymer deposited thereon can be treated with a halide ion exchanging source, such as for example a halide of a transition metal, to produce a catalyst of enhanced activity, referred to generally as catalyst B.

The catalyst B can then have prepolymer deposited thereon in accordance with the invention. Some examples of suitable halide ion exchanging sources that can be employed are transition metal halides, particularly titanium tetrahalides, such as titanium tetrachloride, and others such as vanadium oxychloride, and zirconium tetrachloride. Because titanium tetrachloride is readily available and has produced excellent results, it is preferred.

Generally, treating the nonprepolymerized catalyst A with the halide ion exchanging source takes place in a suitable diluent such as a hydrocarbon diluent, for example, n-pentane, n-hexane, n-heptane, cyclohexane, benzene, xylenes, and the like, to facilitate the treating process.

Following the treatment of catalyst A with the halide ion exchanging source the surplus halide ion exchanging source (the halide ion exchanging source which is not bound to catalyst B) is removed by washing catalyst B with a dry (essential absence of water) liquid such as a hydrocarbon of the type previously disclosed, n-hexane or xylene for example.

The instant invention can be practiced by utilizing the decanting conduit and internal filter to withdraw from the vessel a liquid which has contacted the catalyst or a catalyst component at any stage of the production process. For example, in a preferred process a first catalyst component solution is formed by reacting a metal halide and a transition metal compound in a closed vessel. This solution of

first catalyst component is reacted with a second catalyst component selected from the group consisting of organometallic compounds of metals selected from Groups I, II and III of the Periodic Table (preferably selected from the group consisting of lithium alkyls, Grignard reagents, i.e. organomagnesium halides; dialkyl magnesium compounds, dialkyl zinc compounds, hydrocarbyl aluminum halides and hydrocarbyl aluminum compounds), metal halides and oxyhalides of metals of Group IIIA, IVA, IVB and VB; hydrogen halides and organic acid halides. The resulting precipitate is allowed to at least partially settle and the supernatant liquid is withdrawn from the vessel using the decanting conduit and internal filter. The precipitate is washed at least once with an inert liquid, which is at least partially withdrawn through the filter and decanting conduit. Thereafter, a slurry of the solid product can be contacted with a halide ion exchanging source such as a transition metal halide to produce an activated catalyst. The activated catalyst is allowed to settle, the supernatant liquid is removed through the filter/decanting conduit, and the catalyst is washed at least once using the filter/decanting conduit. At any stage of this process where a solid precipitated catalyst component is formed or present the catalyst or catalyst component can be contacted with an olefin gas to form a prepolymer of olefin on the catalyst particles. The steps of decanting excess liquid solvents, reagents, diluents or wash liquids remain the same. In other words, the invention of using the decanting conduit with filter means can be practiced at any of the steps of preparing the catalyst described where a liquid is to be at least partially removed from a slurry of particles of catalyst, catalyst components or catalyst precursors.

After treatment of the nonprepolymerized catalyst A composition with the halide ion exchanging source, the reaction product can have prepolymer deposited thereon in accordance with the invention. For example, the reaction product can be separated from a reaction mix or diluent and prepolymer deposited thereon in accordance with the procedure set forth above for depositing prepolymer on catalyst A compositions.

According to another aspect of catalyst production, catalyst A which has had prepolymer deposited thereon can be treated with a halide ion exchanging source, such as, for example, a halide of a transition metal, to produce a catalyst of enhanced activity. One example of a

preferable halide ion exchanging source of those set out generally above is titanium tetrachloride, because titanium tetrachloride is readily available and produced excellent results. In general the treatment of prepolymerized catalyst A with the halide ion exchanging source can be carried out as indicated above for the treatment of nonprepolymerized catalyst A. Furthermore, the product obtained by treatment of prepolymerized catalyst A with the halide ion exchanging source can have prepolymer deposited thereon, thereby producing catalyst B having prepolymer twice deposited thereon.

If desired, any catalyst A or catalyst B according to the description above can be admixed with a particulate diluent such as for example, silica, silica-alumina, silica-titania, magnesium dichloride, magnesium oxide, polyethylene, polypropylene and poly(phenylene sulfide), prior to using the catalyst in a polymerization process.

While it may not be necessary in all instances to employ a cocatalyst with the catalyst of the present invention, the use of cocatalyst is recommended for best results. The organometallic cocatalysts suitable for use in accordance with the invention are typically the same as the organometallic compounds suitable for use as the second component of the catalyst of the present invention previously described. Of the organometallic cocatalysts, the organoaluminum cocatalysts are preferred; particularly preferred are trialkylaluminum compounds such as triethylaluminum.

Olefins which can be homopolymerized or copolymerized with the invention catalysts include aliphatic mono-1-olefins. While the invention would appear to be suitable for use with any aliphatic mono-1-olefin, those olefins having 2 to 18 carbon atoms are most often used. The mono-1 olefins can be polymerized according to the present invention employing either a particle form process, a solution form process, or a gas phase process. Aliphatic mono-1-olefins can be copolymerized with other 1-olefins and/or with other smaller amounts of other ethylenically unsaturated monomers, such as 1,3-butadiene., isoprene, 1,3-pentadiene, styrene, alpha-methylstyrene, and similar ethylenically unsaturated monomers which do not impair the catalyst.

The catalysts described can also be utilized to prepare homopolymers and copolymers of conjugated diolefins. Generally the conjugated diolefins contain 4 to 8 carbon atoms per molecule. Examples

of suitable conjugated diolefins include 1,3-butadiene, isoprene, 1,3-pentadiene, and 1,3-octadiene. Suitable comonomers, besides the conjugated diolefins listed about include mono-1-olefins previously described and vinylaromatic compounds generally. Some suitable vinylaromatic compound are those having from 8 to about 14 carbon atoms per molecule, and include for example styrene, various alkylstyrenes such as 4-ethylstyrene, and vinylnaphthalenes such as 1-vinyl-naphthalene.

The polymerization process according to the present invention employing the catalysts and cocatalysts as above described can be performed either batchwise or continuously.

Using the catalysts prepared by the inventive method, improved homopolymers and copolymers of olefins can be produced. Olefins having in the range of from 2 to about 10 carbon atoms, or preferably in the range of from 2 to about 8 carbon atoms, can be used. The invention is particularly beneficial in the preparation of polyolefins comprising polyethylene, such as the homopolymer and copolymers of ethylene with one or more of propylene, 1-butene, 1-pentene and 1-hexene.

The catalyst of U.S. 4,325,837 (with or without prepolymer) and its production is shown in the working examples herein. However, it is emphasized that the invention is applicable to the production and use in polymerization of many similar catalysts.

Typical ethylene polymerization conditions in a loop reactor for a particle form process would include for example, temperatures in the range of from about 180 F to about 240 F, total pressures in the range of from about 450 to about 700 psig, residence times preferably in the range of from about 3/4 to about 1½ hours, ethylene concentrations in the liquid solvent in the range of from about 2 to about 8 weight percent based on liquid solvent and hydrogen, when present to influence the melt index of the polymer, in the preferred range of from about 0.1 to 0.3 mol percent based upon the liquid solvent.

Generally, this catalyst is produced in the absence of moisture and oxygen. A typical multistep, batch process involves contacting about 1 mole of particulate, substantially anhydrous $MgCl_2$ with about 2 moles of titanium tetraethoxide in sufficient hydrocarbon, e.g. n-hexane, at about 100°C to produce a solution. The solution is cooled to about 30°C and treated with about 1 mole of ethylaluminum sesquichloride (EASC) over

a several hour period to produce a precipitate (slurry) of catalyst precursor (a first catalyst component). The catalyst precursor slurry is washed several times with portions of hydrocarbon to remove or at least substantially remove soluble byproducts and excess EASC. Washing can be accomplished by allowing the catalyst precursor slurry to settle, decanting the mother liquor, mixing the catalyst slurry with fresh solvent, allowing the slurry to settle, decanting wash liquid and repeating the sequence as many times as required to purify the slurry to the desired degree. When prepolymer is not added, the slurry is diluted with fresh solvent and sufficient $TiCl_4$ is added to provide about one part $TiCl_4$ by weight per part by weight of catalyst (dry basis) produced and the mixture is stirred for about 1 hour at about 30°C (although higher temperatures e.g. 100°C, can be used). This "activating" step forms the final catalyst. The catalyst slurry is then allowed to settle, mother liquor is decanted and the slurry washed about 4 times with fresh solvent as before to substantially remove any unreacted $TiCl_4$. The purified, activated catalyst slurry is then passed to a receiver for storage until needed for polymerization of ethylene alone or, e.g. in combination with a minor amount of a higher 1-olefin or 1-olefin mixture.

When prepolymer is to be added to the catalyst precursor, this is generally done prior to the $TiCl_4$ treatment, (but can follow it) by adding fresh solvent to the slurry, additional EASC and sufficient ethylene in the form of a liquid and/or vapor to provide the desired level of polyethylene (prepolymer) to the catalyst precursor. Detailed procedures and criteria for incorporating prepolymer into catalysts to which the invention is applicable are disclosed in U.S. 4,325,837, Columns 10-13. It has been discovered that a catalyst prepolymer content in the range of from about 5 to about 12 weight percent of the total catalyst composition is most effective in reducing polymer fines and avoiding catalyst feeding problems, and a particularly preferred prepolymer content is in the range of from about 6 to about 10 weight percent of the total catalyst composition, which was established as the "target zone" of Example II. The product is washed, then treated as before with $TiCl_4$.

In producing catalyst with prepolymer as outlined above, generally 10-12 separate washes are used in the process when an internal filter is not employed. When an internal filter is used according to the

invention, about five washes can be eliminated to approximately halve the total time normally required and simultaneously reduce the solvent needed.

FILTER MEANS

Any suitable filter means can be used in conjunction with the at least one decanting conduit which is used to remove treating liquid, wash liquid or the like from the settled catalyst particles. Preferably said filter means are contained within the reactor or treating vessel (hence the term "internal" filter), but attached externally to the decanting conduit rather than contained within it, to provide a relatively large filter area relative to the cross-sectional area of the exit conduit. Thus, there will be relatively little pressure drop across the filter, yet a high filtering rate can be maintained without prematurely clogging the filter, and the filter can be omnidirectional rather than directed in line with the exit conduit. The filter means described in Example II is a configuration which provides a large filter area compared to the conduit cross-section, yet can easily be inserted into a vessel through a port hole and subsequently connected to the exit conduit. The filter means should be removable from the vessel and/or the exit conduit to permit changing of filter elements. In operation, the filter means can be expected to periodically become clogged by particles retained on the surface, requiring that the filter means be backflushed, cleaned, or the filter element changed. If otherwise acceptable to the process, a convenient way to provide for backflushing the filter means is to use the same exit conduit with which wash liquid is removed, as disclosed in U.S. 4,066,417. The liquid can be forced through the exit conduit either by taking suction on the conduit or by pressurizing the vessel above ambient pressure. Using filter means on the decanting conduit, the conduit can preferably be lowered to a position just above the settled solids before decanting; in fact, the filter means can contact or enter the settled solids when it is necessary to remove most of the liquid. The decanting process can be commenced while some solids are still settling.

The physical surface area filter means fitted to the exit conduit, e.g. the total surface area of a cloth filter element, can be in the range of from about 10 to about 1000 times the cross-sectional area of the exit conduit, preferably in the range of from about 50 to about

600, or more preferably from about 300 to about 500. The filter element can be supported by a holder having a perforated surface providing from about 30 to about 60 percent free area to ensure both adequate strength and free area for filtering action.

The filter element can be of any suitable material - mesh, woven or non-woven fabric, felts, etc. of metals, inorganics, natural or synthetic fibers - which is resistant to the liquid and other materials involved, particularly to acid solutions or other hostile environments which arise in the processing of catalysts to which this invention is applicable. The porosity of the filter element should be such that particles above the desired minimum size will not be lost from the vessel, but that some finer particles can be retained in the filter means and/or removed with a part of the wash liquid. That is, particles of at least the minimum desired size for catalyst use are retained in the vessel, while some "fines" of smaller size are removed with the wash liquid. A wide range of filter cloths can be employed in practicing the invention depending upon the fineness of the catalyst particles produced and the chemical nature of the various mother liquors produced and the wash liquids employed. Thus the cloth can be made from natural fibers such as cotton or synthetic fibers such as polyester, e.g. polyethylene terephthalate.

Woven and nonwoven cloths can be used. In woven fabrics, such weaves as plain, twill, chain and satin can be selected, consistent with the flow rate of filtrate desired. Yarn ply in constructing such fabrics can vary from 2 X 2 to 4 X 4 and the like. The mesh count, for example can be in the range of from about 8X8 to about 100X100, usually from about 30X20 to about 350X80.

All of the enumerated variables, the chemical nature of the filter media, the expected average particle size of the catalyst particles and the filtration rate consistent with the production of good quality catalysts are taken into account in selecting the type of filter medium needed. Only a limited amount of experimentation will be needed in determining a suitable filter medium.

Based upon the successful use of filter cloth having an effective sieve opening of about 45 microns in the examples, it is believed that filter elements having an apparent sieve opening in the range of from about 10 to about 100 microns preferably in the range of

from about 20 to about 80 microns, can be used effectively for catalysts in general. Additionally, the permeability of the filter element can be characterized by the passage of pressurized air through it. The filter should transmit air at a rate in the range of from about 50 to about 1000, preferably about 200 - 800 standard cubic feet per minute (SCFM) per square foot under a pressure differential of 1½ psi. For the supported transition metal catalysts described herein, a filter element having an effective sieve opening in the range of from about 20 to about 60 microns, or more preferably from about 40 to 50 microns is preferred, with permeability preferably in the range of from about 600 to about 800 SCFM per square foot at 1½ psi.

For washing catalysts such as those of the examples, the filter cloth presently preferred is a standard polyester twill weave, available from various commercial sources, such as Milliken Style 4205, Kodel polyester, Royal Croyden 9001, with air permeability of 740 SCFA at a differential pressure of 1½ psi. This material retained particles of about 43 - 45 microns.

The type of filter medium needed for a particular application can be experimentally determined in a dry box with a representative portion of the catalyst slurry by employing a filter leaf. Such a small-scale test is shown, for example, in pages 19-60, 61 of the Chemical Engineers' Handbook, Fifth Ed, Perry and Chilton, McGraw-Hill Book Company. The approximate porosity and desired air permeability or flow rate can then be determined. With this information, it becomes possible to select candidate filter media available from vendors' catalogs and try them under the actual working conditions to be employed with the catalyst slurries. For example, if a 400 mesh wire screen having a sieve opening of 37 microns is found to retain or substantially contain the slurry particles then an appropriate filter cloth, e.g. polyester twill, non-woven polypropylene, or the like, having an equivalent porosity can be employed. If the gas flow rate through the filter cloth is adequate, then a desirable filter cloth has been found for the application.

SOLVENTS AND WASH LIQUIDS

The inventive use of the internal filter is applicable to the decanting of various liquids used or present in treating , forming or washing solid catalyst, catalyst components or catalyst precursors in

various stages of preparation. For instance, the wash liquids which can be used in the preparation of such olefin polymerization catalysts as are disclosed herein can be hydrocarbons which are inert diluents to the said catalyst or catalyst components, but solvents for the various by-products or impurities which are to be removed. Preferred hydrocarbons comprise paraffins having in the range of from about 4 to about 10, or preferably about 5 to 8, carbon atoms, and aromatic hydrocarbons having in the range of from about 6 to about 10, or preferably 7 to 8, carbon atoms. Preferred hydrocarbons comprise n-pentane, n-hexane, n-heptane, toluene and xylene.

The invention is further illustrated by the following examples, which should not be considered to be more limiting than the appended

EXAMPLE I - CONTROL

A typical run for the conventional production of the Ti-Mg catalyst containing about 6 to about 10 weight percent prepolymer (polyethylene) in a 100 gal. (378.5 L) Pfaudler reactor follows. All operations were conducted in the absence of air, generally employing dry nitrogen as the atmosphere.

To the stirred reactor was charged about 53 gal. (200 L) of dry n-hexane, 6200 g (65.11 moles) of particulate anhydrous $MgCl_2$ (actually contains about 1 wt. percent water), and 60 lbs. (119.3 moles) of titanium tetraethoxide, $Ti(OEt)_4$. The mixture was heated for 1 hour at 100°F, then cooled to about 30°C. Over a 4 hour period, 130 lbs. of ethylaluminum sesquichloride (EASC) as a 25 wt per cent solution in n-hexane (59.6 moles EASC) was added as the agitation continued. The agitation was continued for 30 minutes more and the mixture was allowed to settle for 30 minutes. The mother liquor was decanted through a tube inserted in the reactor to just above the slurry level, 50 gal. (189.3 L) of n-hexane was added, mixing was resumed for about 30 minutes and the mixture was then allowed to settle for 30 minutes. Liquid was forced through the tube by the nitrogen pressure in the reactor. The wash liquid was then decanted and the slurry washed once more as before using 33 gal. (125 L) of fresh n-hexane. After decanting, another 33 gal. of n-hexane was added, agitation was resumed, the nitrogen pressure in the reactor was reduced to less than about 2 psi (14 kPa) and the reactor pressured to about 20 psi (144 kPa) with ethylene. After holding about 5 minutes, the ethylene pressure was reduced to about 2 psi, and 18 lbs.

(8.3 moles) of the EASC solution was added, followed by 2.4 lbs. (1.09 kg) of ethylene, and agitation was continued for about 30 minutes. Any remaining ethylene was removed by purging with nitrogen several times and the solids were allowed to settle for about an hour. The supernatant liquid was removed by decanting through the tube and the slurry washed twice with 33 gal. of n-hexane per wash as before. Following the last decanting, 33 gal. of n-hexane was added, agitation was commenced and 40 lbs. (18 kg) of $TiCl_4$ were added. Mixing was continued for 1 hour, then the solids allowed to settle. The supernatant liquid was decanted and the solids were washed five times as before, using 40 gal. of n-hexane per wash. Following the final wash, the liquid was decanted and the slurry was passed to a receiver for storage. In preparing the catalyst, a total of 478 gallons of n-hexane was employed, in which 10 separate wash steps and 11 decanting steps occurred.

Following this general procedure, a total of 32 catalyst batches were prepared, weighing a total of 1057.3 lbs. (about 481 kg), calculated on a dry basis. The average weight per batch was calculated to be about 33 lbs. (15 kg).

EXAMPLE II - INVENTION CATALYSTS

A series of catalysts was prepared as before using about the same weights and volumes of components, and the same number of wash and decanting steps, but decanting of supernatant liquids was accomplished through an internal filter attached to the end of the decant tube in all instances.

The 1/2 inch diameter decant tube terminated in a hollow, horizontally disposed 1/16 inch (1.6 mm) thick, perforated, stainless steel filter holder 12½ inches (31.7 cm) long, having an outer diameter of 2 3/16 inches (5.5 cm) with solid ends. The center portion of the base containing the outlet to which the decant tube was attached was 2 inches (5.1 cm) in length and was unperforated. The perforations in each filtering section comprised 1/4 inch (6.3 mm) holes on 5/16 inch (7.9 mm) centers. The filter holder was the internal element from a Ronninger-Petter Model 1112 filter, obtained from the Ronningen-Petter Co., a division of Dover Corporation of Portage, MI 49081. Over each end of the base was slipped a snug fitting polyester twill filter sock (equivalent to 325 mesh wire screen in porosity) about 5 3/4 inches (14.6 cm) in length, and over the sock was placed a snug fitting 14 mesh

stainless steel sleeve of about the same length. The filter cloth was obtained from various commercial sources. Both filter sock and mesh sleeve were clamped to the non-perforated center section for retaining purposes during decanting and for backflushing purposes when needed. Air flow through the filter cloth was determined to be 780 SCFM (22 $m^3$/min.) per square foot, measured at a 1½ psi (14 kPa) pressure drop. The total available area for filtration was 75 square inches (484 $cm^2$). The area ratio of filter to decant tube was thus about 382.

The filter device was inserted through a port hole in the reactor and was lowered into the catalyst slurry.

Following this general procedure, a total of 55 catalyst batches were prepared weighing a total of 2042.6 lbs. (about 928 kg), calculated on a dry basis. The average weight per batch was calculated to be about 37 lbs. (17 kg), giving an average increase of about 4 lbs. (1.8 kg) per batch compared to Example I, even though the quantities of starting materials were substantially identical.

EXAMPLE III - Ethylene Polymerization

Ethylene was polymerized under particle form conditions in a continuous process employing a 19.8 gal. (75.2 L) loop reactor to make ethylene homopolymers having melt indexes in the range of about 30±5. Recovered polymer was subsequently screened to determine the amount of fines generated less than 200 mesh (U. S. Sieve Series) in size. In this test a drum of recovered polymer is tumbled about 20 minutes. A polymer sample of about 200 g is removed, weighed and screened for 15 minutes using an electric Ro-Tap Sieve Shaker manufactured by the U.S. Tyler Manufacturing Company, Cleveland, Ohio. However, any other sieve shaker employing mechanical or hand shaking could be used. The amount of polymer fines of less than 200 mesh size was determined by weighing, and from that value was calculated the weight percent fines for each polymer so tested. Previous experience has indicated that catalysts producing polyethylene under the conditions used in the 19.8 gal loop reactor having a melt index of about 30 which contain about 6 weight per or less polymer fines will perform very well in commercial size loop reactors. The commercially made polymers will also have low levels of polymer fines whether low melt index (e.g. 0.2 or lower) polymers are produced or high melt index (e.g. 40 or higher) polymers are produced.

Data for polymers made with catalysts produced without and with the use of an internal filter in the decanting steps, respectively, are tabulated in Tables I and II.

TABLE I

Polyethylene Samples Prepared Without Use of Internal Filter in Decanting

| Run | Prepolymer, Wt % Nominal | Prepolymer, Wt % Avg. | MI, g/10 min Nominal | MI, g/10 min Avg | Productivity, kg/g/1¼ hr Nominal | Productivity, kg/g/1¼ hr Avg | Fines Content, Wt. % less than 100 Mesh Nom | 100 Mesh Avg | 200 Mesh Nom | 200 Mesh Avg |
|---|---|---|---|---|---|---|---|---|---|---|
| 1 | 4.2 | | 31 | | 27.1 | | 19 | | 5.6 | |
| 2 | 4.9 | 4.6 | 31 | 31 | 27.6 | 27.4 | 28 | 23 | 8.5 | 7.0 |
| 3 | 5.6 | | 27 | | 33.3 | | 20 | | 3.7 | |
| 4 | 5.7 | | 31 | | 16.5 | | 19 | | 4.6 | |
| 5 | 5.7 | 5.7 | 27 | 28 | 31.0 | 26.9 | 24 | 21 | 5.8 | 4.9 |
| 6 | 6.3 | | 28 | | 32.9 | | 14 | | 2.1 | |
| 7 | 6.4 | | 28 | | 31.6 | | 22 | | 5.0 | |
| 8 | 6.5 | | 30.5 | | 25.5 | | 35 | | 9.9 | |
| 9 | 6.7 | | 32.5 | | 20.5 | | 17 | | 4.2 | |
| 10 | 6.9 | 6.6 | 33 | 30 | 32.9 | 28.7 | 17 | 21 | 2.7 | |
| 11 | 7.1 | | 31 | | 28.9 | | 38 | | 14 | |
| 12 | 7.3 | | 24 | | 28.0 | | 14 | | 3.3 | |
| 13 | 7.4 | | 27 | | 28.2 | | 19 | | 3.9 | |
| 14 | 7.5 | | 31 | | 26.4 | | 24 | | 8.7 | |
| 15 | 7.6 | | 33 | | 19.3 | | 16 | | 5.1 | |
| 16 | 7.8 | 7.4 | 31 | 27 | 30.0 | 26.8 | 10 | | 1.6 | 6.1 |
| 17 | 8.0 | | 32 | | 23.5 | | 15 | | 3.6 | |
| 18 | 8.0 | | 36 | | 22.8 | | 19 | | 5.8 | |
| 19 | 8.1 | | 31.6 | | 27.3 | | 28 | | 8.8 | |
| 20 | 8.2 | | 29 | | 24.0 | | 36 | | 11 | |
| 21 | 8.2 | 8.1 | 27 | 31 | 15.1 | 22.5 | 19 | 23 | 4.9 | 6.8 |
| 22 | 9.2 | | 30 | | 31.3 | | 20 | | 4.3 | |
| 23 | 9.2 | | 30 | | 18.2 | | 21 | | 5.7 | |
| 24 | 9.3 | | 29 | | 23.5 | | 19 | | 4.5 | |
| 25 | 9.3 | | 28 | | 31.7 | | 37 | | 11 | |
| 26 | 9.3 | | 24 | | 23.6 | | 13 | | 2.8 | |
| 27 | 9.6 | | 29 | | 18.3 | | 21 | | 7.2 | |
| 28 | 9.7 | 9.4 | 32 | 29 | 15.5 | 23.2 | 23 | 22 | 7.1 | 6.1 |
| 29 | 10.3 | | 33 | | 16.5 | | 29 | | 11 | |
| 30 | 10.3 | | 30 | | 24.1 | | 23 | | 4.6 | |
| 31 | 10.5 | | 31 | | 27.9 | | 17 | | 3.1 | |
| 32 | 10.6 | 10.4 | 28 | 30 | 18.1 | | 21.6 | 27 | 5.0 | 5.9 |
| 33 | 11.4 | | 31 | | 25.3 | | 16 | | 3.3 | |
| 34 | 11.9 | 11.6 | 27 | 29 | 29.8 | 27.6 | 11 | 13 | 1.9 | 2.6 |
| 35 | 12.1 | | 26.5 | | 23.6 | | 27 | | 7.2 | |
| 36 | 12.2 | 12.1 | 27 | 27 | 34.7 | 29.2 | 20 | 23 | 3.7 | 5.4 |
| Avg. Overall | 9.3 | | 29.6 | | 25.4 | | | | 5.69 | |

TABLE II

Polyethylene Samples Prepared With Use of Internal Filter in Decanting

| Run | Prepolymer Wt.% Nominal | Prepolymer Wt.% Avg | Melt Index Nominal | Melt Index Avg | Productivity kg/g/1¾ hr Nominal | Productivity kg/g/1¾ hr Avg | Fines Content, Wt.% less than 100 Mesh Nom | 100 Mesh Avg | 200 Mesh Nom | 200 Mesh Avg |
|---|---|---|---|---|---|---|---|---|---|---|
| 1 | 4.4 | 4.4 | 30 | 30 | 41.7 | 41.7 | 21 | 21 | 5.8 | 5.8 |
| 2 | 5.5 | | 34 | | 37.5 | | 17 | | 4.5 | |
| 3 | 5.7 | 5.6 | 31 | 32 | 26.5 | 32.0 | 26 | 21 | 5.6 | 5.0 |
| 4 | 6.0 | | 33 | | 25.0 | | 39 | | 12 | |
| 5 | 6.0 | | 31 | | 27.1 | | 28 | | 7.7 | |
| 6 | 6.4 | | 25 | | 33.6 | | 14 | | 2.4 | |
| 7 | 6.6 | | 31 | | 33.3 | | 21 | | 5.2 | |
| 8 | 6.6 | | 30 | | 38.5 | | 14 | | 2.7 | |
| 9 | 6.8 | | 33 | | 34.2 | | 19 | | 4.5 | |
| 10 | 6.8 | | 29 | | 40.6 | | 24 | | 5.6 | |
| 11 | 6.9 | 6.5 | 29 | 30 | 39.4 | 34.0 | 24 | 23 | 6.1 | 5.8 (4.9) |
| 12 | 7.0 | | 33 | | 39.8 | | 21 | | 5.2 | |
| 13 | 7.2 | | 32 | | 21.3 | | 29 | | 5.8 | |
| 14 | 7.6 | | 26 | | 30.9 | | 20 | | 5.2 | |
| 15 | 7.6 | | 35 | | 40.6 | | 18 | | 4.4 | |
| 16 | 7.6 | | 29 | | 29.9 | | 31 | | 6.5 | |
| 17 | 7.9 | 7.5 | 31 | 31 | 28.5 | 31.8 | 23 | 24 | 4.8 | 5.3 |
| 18 | 8.3 | | 26 | | 32.1 | | 16 | | 3.6 | |
| 19 | 8.6 | | 26 | | 33.3 | | 16 | | 3.3 | |
| 20 | 8.8 | | 29 | | 24.5 | | 21 | | 4.0 | |
| 21 | 8.8 | | 35 | | 32.1 | | 13 | | 1.8 | |
| 22 | 8.9 | | 28 | | 29.2 | | 26 | | 6.9 | |
| 23 | 8.9 | 8.7 | 33 | 29 | 31.7 | 30.5 | 17 | 18 | 2.8 | 3.7 |
| 24 | 9.1 | | 34 | | 32.8 | | 18 | | 2.5 | |
| 25 | 9.2 | | 28 | | 20.0 | | 26 | | 5.0 | |
| 26 | 9.2 | | 32 | | 32.5 | | 22 | | 4.0 | |
| 27 | 9.4 | | 34 | | 21.3 | | 26 | | 6.9 | |
| 28 | 9.5 | | 26.5 | | 17.0 | | 29 | | 6.6 | |
| 29 | 9.5 | | 30 | | 28.0 | | 21 | | 5.6 | |
| 30 | 9.6 | | 31 | | 29.9 | | 7.8 | | 0.9 | |
| 31 | 9.6 | | 29 | | 34.7 | | 13 | | 1.7 | |
| 32 | 9.7 | | 35 | | 34.7 | | 15 | | 2.6 | |
| 33 | 9.8 | 9.5 | 34 | 31 | 30.2 | 28.1 | 16 | 19 | 3.4 | 3.9 |
| 34 | 10.0 | | 34 | | 28.0 | | 13 | | 2.0 | |
| 35 | 10.3 | | 31.5 | | 31.3 | | 15 | | 2.0 | |
| 36 | 10.4 | | 34 | | 34.2 | | 18 | | 3.8 | |
| 37 | 10.7 | | 26 | | 48.1 | | 15 | | 2.4 | |
| 38 | 10.7 | | 29 | | 42.6 | | 22 | | 5.0 | |
| 39 | 10.8 | 10.5 | 27 | 30 | 29.9 | 35.7 | 13 | 16 | 2.2 | 2.9 |
| 40 | 11.2 | 11.2 | 32 | 32 | 28.7 | | 17 | | 3.4 | 3.4 |
| 41 | 12.3 | 12.3 | 31 | 31 | 30.2 | | 12 | | 1.9 | 1.9 |
| Avg. Overall | 4/18 | | 30.7 | | 31.84 | | | | 4.8 | |

Averaging all data points for selected parameters in Tables I and II, the weight percent prepolymer was 8.3 in Table I and 8.4 in Table II, while the melt indexes were 29.6 and 30.7, respectively. Under these rather comparable conditions, the polymers prepared with filter (Table II) had higher catalyst productivity (31.84) and less fines content (4.18 wt. %) compared to the control polymers of Table I (25.40 and 5.69, respectively).

The data in each Table are further separated on the basis of weight percent prepolymer level, e.g. 4 to 4.9 weight percent, 8 to 8.9 weight percent, etc. The mean values associated with each corresponding series of runs are indicated and from these results are plotted in Figure 1, average catalyst productivity versus average weight percent prepolymer and in Figure 2, average weight percent particles of less than 200 mesh size versus weight percent prepolymer. Each mean value is plotted versus the mean value of weight percent prepolymer for that group.

The curves shown in Figure 1 show that preparing catalysts with the internal filter in the processing steps results in more active catalysts over the prepolymer range shown, based on the higher productivity results relative to the comparison catalysts produced in the absence of the filter. All the average productivity values without the filter are below the numerical value of 30, while almost all average values for the method using the filter were above this figure. Such results are surprising and not readily explainable.

The curves shown in Figure 2 show at similar prepolymer levels on the catalysts that lower proportions of polymer fines are generally obtained with the invention catalysts than with the comparison catalysts. Once again, these results are surprising and not predictable, since at a given prepolymer level it would be expected that similar polymer fines content would result whether catalysts of the same type were made in the absence or presence of an internal filter. Obtaining smaller proportions of polymer fines when using catalyst with a given amount of prepolymer deposited thereon is an advantage, since catalyst which will produce polymer having less than any required maximum value of fines can thus be prepared with smaller amounts of prepolymer deposited.

The loop reactor was employed under liquid full conditions using isobutane as diluent at steady state conditions with a nominal reactor pressure of 595 psia (4.10 MPa), agitator speed of 1850 RPM and a

production rate of about 25 lbs./hour polyethylene. Nominal ethylene concentration was about 6 mole percent, nominal hydrogen concentration was about 1 mole percent, nominal reactor temperature was about 102°C and nominal triethylaluminum cocatalyst level was 30 ppm based on the diluent.

Previous work has determined that in decreasing polymer fines with catalysts of the type described it is necessary to maintain a prepolymer level ranging from about 5 to 12 wt. percent or preferably about 6 to 10 wt. percent, to obtain polymers containing an average of 6 wt. percent or less polymer fines of less than 200 mesh in size. Polymers containing more fines of this size can present an explosive hazard and can create difficulties in converting them into pellets or other shapes because of feeding irregularities. Inspection of the results given in Tables I and II reveal that 15 of the 32 comparison catalysts yielded polymer having 6 wt. percent or less of less than 200 mesh fines (47%), and 17 of the catalysts (53%) produced polymers that were outside the target area. The target area is arbitrarily selected and comprises a prepolymer level ranging from 6 to 10 weight percent and a polymer fines level of less than 200 mesh in size ranging from 0 to 6 weight percent. Productivity of each catalyst is given in terms of kg polyethylene per g solid catalyst per hour, calculated over a 1¼ hour average residence time in the reactor.

Of the 39 invention catalysts, the data in Table II show that 23 (59%) of them produced polymers having 6 wt. percent or less of less than 200 mesh fines, and 16 (41%) of the catalysts produced polymers that were outside the target area from the standpoint of incorrect prepolymer level and/or excessive fines level.

These results show that production of the catalyst is more reliable and more consistent when an internal filter is employed in decanting supernatant liquids employed in purifying the catalyst.

Various modifications and alterations of this invention will become apparent to those skilled in the art without departing from the scope and spirit of this invention. The foregoing discussion and examples merely illustrate preferred embodiments of this invention and do not unduly limit the same.

The following part of the description are preferred embodiments 1 to 34 presented in the format of claims.

1. A method for producing a solid particulate catalyst for polymerization of olefins, comprising the steps of:

(a) contacting in a vessel at least a solid component of said catalyst with an inert liquid to form a slurry,

(b) allowing solid particles of said component of said catalyst to at least partially settle, forming a denser slurry and a supernatant liquid, and

(c) withdrawing at least a portion of said supernatant liquid from said vessel after such contacting via a decanting conduit fitted at or near the intake end with filter means, said filter means being positioned at or near the boundary area between supernatant liquid and denser slurry.

2. A method in accordance with claim 1 wherein said filter means comprises a filter element having a porosity, permeability and effective surface area which are effective to increase the productivity of said catalyst and/or to reduce the portion of polymer fines produced in the polymerization of olefins, as compared to a catalyst produced in an identical process but without the filter means.

3. A method in accordance with claim 1 wherein said filter means comprise a filter element having a surface area in the range of about 10 to about 1000 times the cross-sectional area of said decanting conduit, with a free area in the range of from about 30 to about 60 percent.

4. A method in accordance with claim 3 wherein said filter element has a surface area in the range of from about 50 to about 600 times the cross-sectional area of said decanting conduit.

5. A method in accordance with claim 3 wherein said filter element has a surface area in the range of from about 300 to about 500 times the cross-sectional area of said decanting conduit.

6. A method in accordance with claim 1 wherein said filter means have an effective sieve opening in the range of from about 10 to about 100 microns, and an air permeability based upon a differential pressure of 1.5 psi in the range of from about 50 to about 1000 standard cubic feet per minute per square foot.

7. A method in accordance with claim 6 wherein said sieve opening is in the range of from about 20 to about 70 microns, and said air permeability is in the range of from about 200 to about 800 standard cubic feet per minute per square foot.

8. A method in accordance with claim 6 wherein said sieve opening is in the range of from about 40 to about 50 microns, and said air permeability is in the range of from about 600 to about 800 standard cubic feet per minute per square foot.

9. A method in accordance with claim 1 wherein said filter means comprise a cylindrical, perforated metal filter holder with closed ends, rotably attached to said decanting conduit to permit alignment parallel to or oblique to said decanting conduit; a fabric filter element mounted externally on the surface of said filter holder; and a mesh sleeve mounted externally to secure said filter element to said filter holder.

10. A method in accordance with claim 1 comprising the steps of

(1) reacting a metal halide and a transition metal compound to form a first catalyst component; and then,

(2) forming a first slurry by reacting a solution of said first catalyst component with a second catalyst component selected from the group consisting of

(a) organometallic compounds of Group I, II and III metals;

(b) metal halides and oxyhalides of metals of Groups IIIA, IVA, IVB and VB;

(c) hydrogen halides; and

(d) organic acid halides; and then

(3) optionally, treating the solid product resulting from the combination of said first and second catalyst components with a transition metal halide to form a second slurry, and

(4) carrying out steps (b) and (c) of claim 1 at least once with at least one of said first and second slurries.

11. A method in accordance with claim 10 wherein said organometallic compounds of (a) are selected from the group consisting of lithium alkyls, Grignard reagents, dialkyl magnesium compounds, dialkyl zinc compounds, and hydrocarbyl aluminum halides and said transition metal halide of (d) is a titanium tetrahalide.

12. A method in accordance with claim 10 further comprising contacting said catalyst and/or catalyst component with an olefin gas to form a prepolymer on said catalyst and/or catalyst component.

13. A method in accordance with claim 12 wherein said olefin has in the range of from 2 to about 8 carbon atoms.

14. A method in accordance with claim 12 wherein said olefin is ethylene.

15. A method in accordance with claim 1 wherein said inert liquid is an aromatic or paraffinic hydrocarbon having in the range of from about 4 to about 10 carbon atoms.

16. A method in accordance with claim 15 wherein said liquid is n-hexane, n-heptane, n-octane, toluene or xylene.

17. A catalyst for the polymerization of olefins prepared in accordance with claim 1.

18. A catalyst for the polymerization of olefins prepared in accordance with claim 2.

19. A catalyst for the polymerization of olefins prepared in accordance with claim 10.

20. A catalyst for the polymerization of olefins prepared in accordance with claim 12.

21. A catalyst for the polymerization of olefins prepared in accordance with claim 12, containing in the range of from about 5 to about 12 weight percent of said prepolymer.

22. A catalyst for the polymerization of olefins prepared in accordance with claim 12, having a productivity of at least about 30 kg polyethylene per g catalyst per hour of polymerization in the polymerization of ethylene having a melt index in the range of from about 25 to 35, wherein said polymerization is carried out in the presence of hydrogen and typical ethylene polymerization conditions.

23. A catalyst in accordance with claim 22, containing in the range of from about 5 to about 12 weight percent of said prepolymer.

24. A process of polymerizing at least one olefin having in the range of from 2 to about 10 carbon atoms with a catalyst prepared in accordance with claim 1.

25. A process in accordance with claim 24 wherein said olefin has in the range of from about 2 to about 8 carbon atoms.

26. A process in accordance with claim 24 wherein said olefin is ethylene or propylene.

27. A process of polymerizing at least one olefin having in the range of from about 2 to about 10 carbon atoms with a catalyst prepared in accordance with claim 2.

28. A process of polymerizing at least one olefin having in the range of from about 2 to about 10 carbon atoms with a catalyst prepared in accordance with claim 10.

29. A process in accordance with claim 28 wherein said olefin has in the range of from about 2 to about 8 carbon atoms.

30. A process of polymerizing at least one olefin having in the range of from about 2 to about 10 carbon atoms with a catalyst prepared in accordance with claim 12.

31. A process in accordance with claim 30 wherein said olefin has in the range of from about 2 to about 8 carbon atoms.

32. A process of polymerizing at least one olefin having in the range of from about 2 to about 10 carbon atoms with a catalyst in accordance with claim 21.

33. A polyolefin prepared in accordance with the process of claim 31, containing less than about 6 weight percent particles finer than 200 mesh.

34. A polyolefin in accordance with claim 33, comprising polymerized ethylene.

PATENT- UND RECHTSANWÄLTE
BARDEHLE, PAGENBERG, DOST, ALTENBURG & PARTNER 

RECHTSANWÄLTE
JOCHEN PAGENBERG DR. JUR., LL. M. HARVARD
BERNHARD FROHWITTER DIPL.-ING.
GÜNTER FRHR. v. GRAVENREUTH DIPL.-ING. (FH)

PATENTANWÄLTE – EUROPEAN PATENT ATTORNEYS
HEINZ BARDEHLE DIPL.-ING.
WOLFGANG A. DOST DR., DIPL.-CHEM.
UDO W. ALTENBURG DIPL.-PHYS.

POSTFACH 860620, 8000 MÜNCHEN 86
TELEFON (089) 980361
TELEX 522791 pad d
CABLE: PADBÜRO MÜNCHEN
BÜRO: GALILEIPLATZ 1, 8 MÜNCHEN 80

DATUM December 13, 1984
31 276-EP D/la

## C l a i m s

1

1. A method for producing a solid particulate catalyst for the polymerization of olefins, c h a r a c t e r i z e d b y the steps of:
   (a) contacting in a vessel at least a solid component of said catalyst with an inert liquid to form a slurry,
   (b) allowing solid particles of said component of said catalyst to at least partially settle, forming a denser slurry and a supernatant liquid, and
   (c) withdrawing at least a portion of said supernatant liquid from said vessel after such contacting via a decanting conduit fitted at or near the intake end with filter means, said filter means being positioned at or near the boundary area between supernatant liquid and denser slurry.

2. The method of claim 1 characterized in that said filter means comprises a filter element having a porosity, permeability and effective surface area which are effective to increase the productivity of said catalyst and/or to reduce the portion of polymer fines produced in the

polymerization of olefins, as compared to a catalyst produced in an identical process but without the filter means.

3. The method of claim 1 or 2 characterized in that said filter means comprise a filter element having a surface area in the range of 10 to 1000 times the cross-sectional area of said decanting conduit, with a free area in the range of 30 to 60 percent; in particular wherein said filter element has a surface area in the range of 50 to 600 times the cross-sectional area of said decanting conduit; preferably 300 to 500 times the cross-sectional area of said decanting conduit.

4. The method of any of the preceding claims characterized in that said filter means have an effective sieve opening in the range of 10 to 100 µm, and an air permeability based upon a differential pressure of 10.5 kPa in the range of 15 to 305$m^3$ per minute per $m^2$, in particular wherein said sieve opening is in the range of 20 to 70µm, and said air permeability is in the range of 61 to 244$m^3$ per minute per $m^2$; in particular wherein said sieve opening is in the range of 40 to 50 µm, and said air permeability is in the range of 183 to 244$m^3$ per minute per $m^3$.

5. The method of any of the preceding claims characterized in that said filter means comprise a cylindrical, perforated metal filter holder with closed ends, rotably attached to said decanting conduit to permit alignment parallel to or oblique to said decanting conduit; a fabric filter element mounted externally on the surface of said filter holder; and a mesh sleeve mounted externally to secure said filter element to said filter holder.

6. The method of any of the preceding claims comprising the steps of

(1) reacting a metal halide and a transition metal compound to form a first catalyst component; and then,

(2) forming a first slurry by reacting a solution of said first catalyst component with a second catalyst component selected from the group consisting of
  (a) organometallic compounds of Group I, II and III metals;
  (b) metal halides and oxyhalides of metals of Groups IIIA, IVA, IVB and VB;
  (c) hydrogen halides; and
  (d) organic acid halides; and then

(3) optionally, treating the solid product resulting from the combination of said first and second catalyst components with a transition metal halide to form a second slurry, and

(4) carrying out steps (b) and (c) of claim 1 at least once with at least one of said first and second slurries.

7. The method of claim 6 characterized in that said organometallic compounds of (a) are selected from lithium alkyls, Grignard reagents, dialkyl magnesium compounds, dialkyl zinc compounds and hydrocarbyl aluminum halides, and said transition metal halide of (b) is a titanium tetrahalide.

8. The method of claim 6 or 7 characterized by further comprising contacting said catalyst and/or catalyst component with an olefin gas to form a prepolymer on said catalyst and/or catalyst component; in particular wherein said prepolymer is formed on said catalyst in an amount of 5 to 12 weight percent; in particular wherein said olefin has in the range of 2 to 8 carbon atoms; in particular wherein said olefin is ethylene.

9. The method of any of the preceding claims characterized in that said inert liquid is an aromatic or paraffinic hydrocarbon having in the range of 4 to 10 carbon atoms; in particular wherein said liquid is n-hexane, n-heptane, n-octane, toluene or xylene.

10. A catalyst for the polymerization of olefins prepared in accordance with claim 8 or 9, characterized by having a productivity of at least about 30 kg polyethylene per g catalyst per hour of polymerization in the polymerization of ethylene having a melt index in the range of 25 to 35 g/10 min wherein said polymerization is carried out in the presence of hydrogen and typical ethylene polymerization conditions.

11. The use of the catalyst as obtained in any of claims 1 to 9 or of claim 10 for the polymerization or copolymerization of olefins; in particular for polymerizing at least one olefin having in the range of 2 to 10 carbon atoms; in particular wherein said olefin has in the range of 2 to 8 carbon atoms; in particular wherein said olefin is ethylene or propylene.

12. A polyolefin obtained in accordance with claim 11, containing less than about 6 weight percent particles finer than 74 µm; in particular wherein said polyolefin comprises polymerized ethylene.

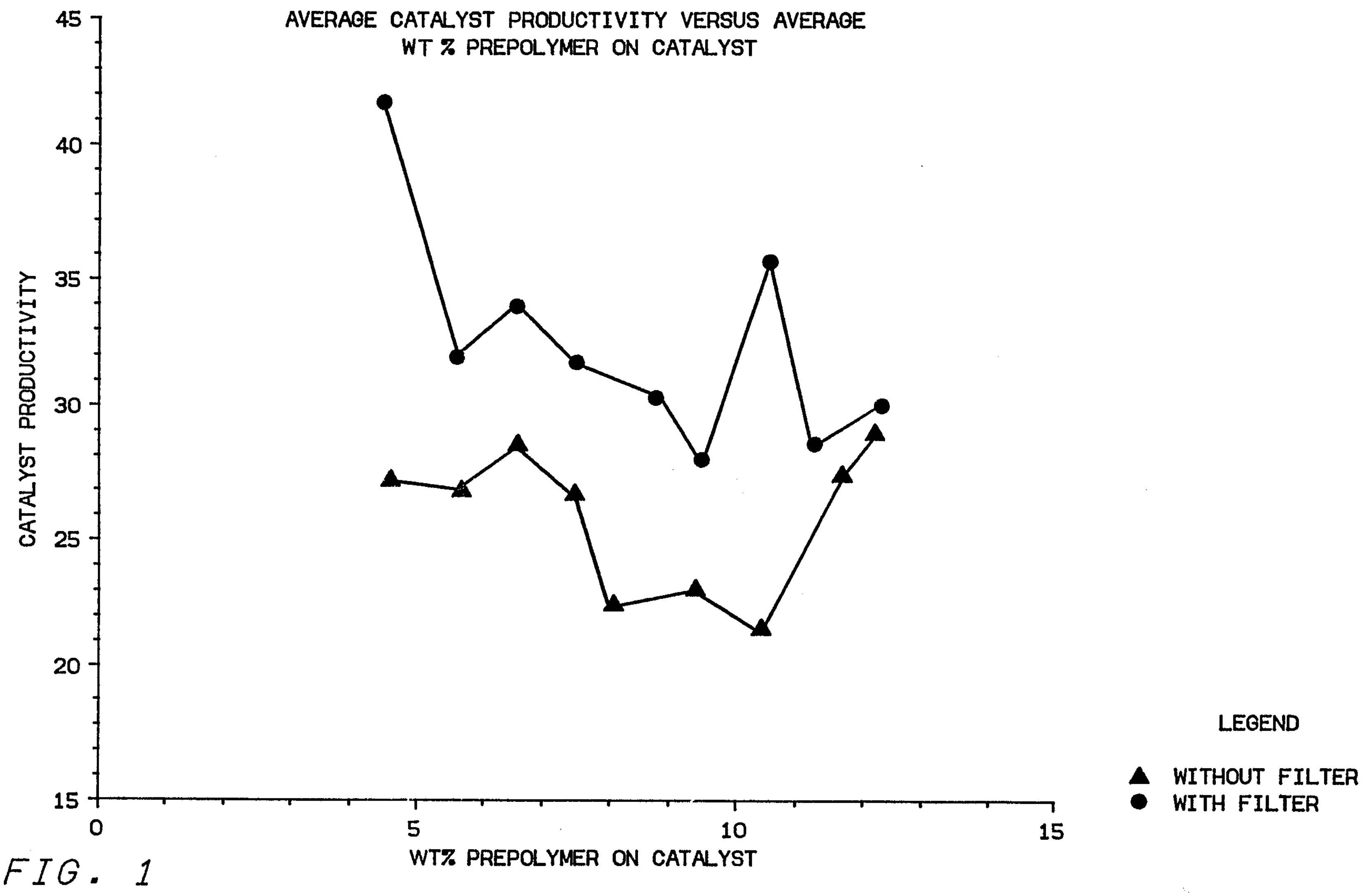
AVERAGE CATALYST PRODUCTIVITY VERSUS AVERAGE
WT % PREPOLYMER ON CATALYST
CATALYST PRODUCTIVITY
45
40
35
30
25
20
15
0
5
10
15
WT% PREPOLYMER ON CATALYST
LEGEND
WITHOUT FILTER
WITH FILTER

*FIG. 1*

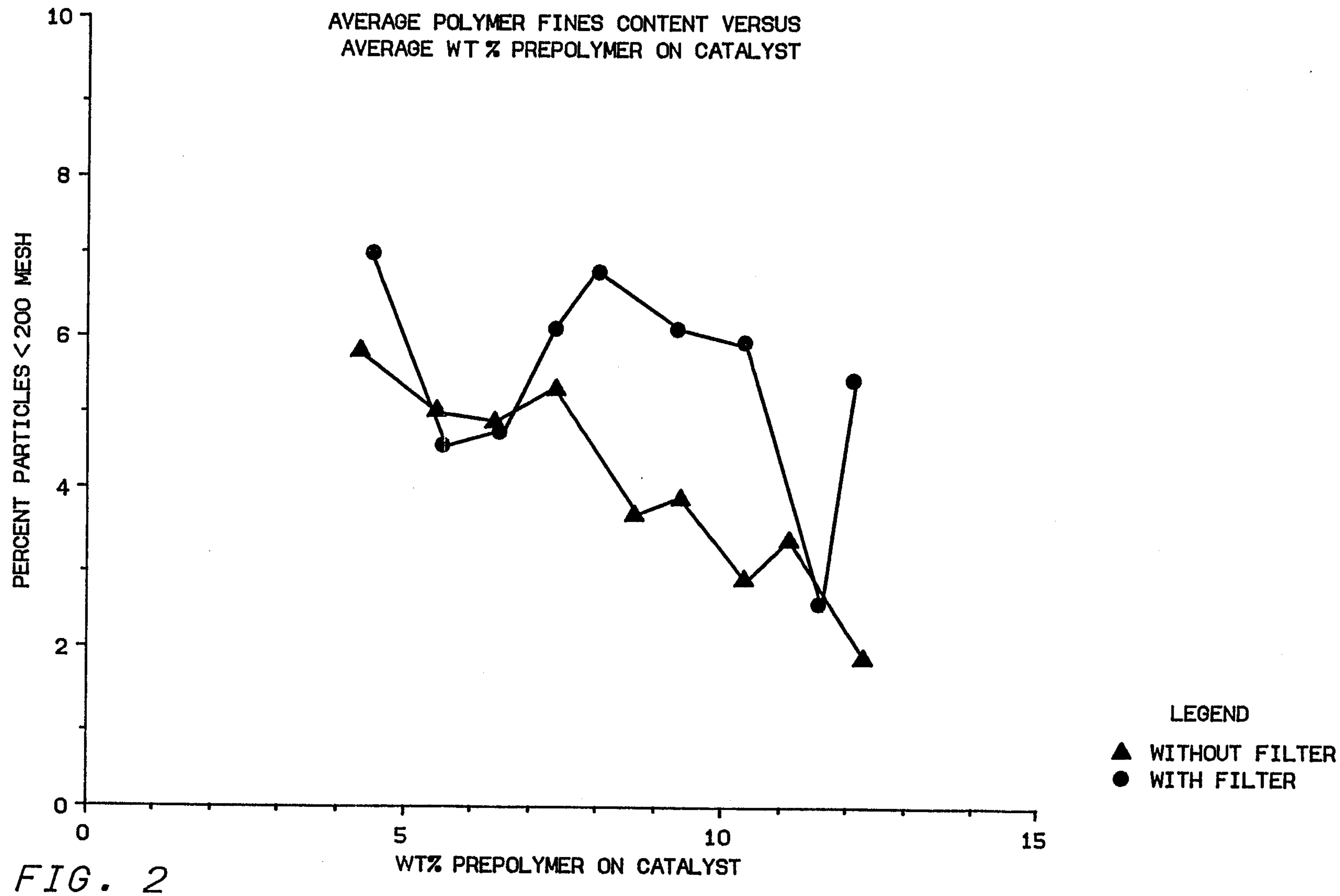
AVERAGE POLYMER FINES CONTENT VERSUS
AVERAGE WT % PREPOLYMER ON CATALYST
PERCENT PARTICLES < 200 MESH
10
8
6
4
2
0
5
10
15
WT% PREPOLYMER ON CATALYST
LEGEND
WITHOUT FILTER
WITH FILTER

FIG. 2